# EUROPEAN PATENT APPLICATION

(11) **EP 2 098 848 A1**
(43) Date of publication of application: **09.09.2009**
(21) Application number: 08075165.4
(22) Date of filing: 04.03.2008
(51) Int. Cl.: G01M 9/04

(54) **Boundary layer control system for wind tunnels**

(71) Applicant: Actiflow B.V., 2628 AL Delft (NL)
(72) Inventor: Bink, Jeroen, 4816 EC Breda (NL)
(74) Representative: Houben, Christiaan Hein Willem Frans

(57) **Abstract**

The invention relates to a suction system for a wind tunnel comprising one or more suction devices as well as one or more suction cells or pressure chambers which are connected to the suction device(s) by means of one or more suction ducts. The pressure chamber(s) are arranged at one or more of the walls of a wind tunnel and are defined by a wall structure which comprises a suction plate which replaces a part of the wind tunnel wall and which is formed by one or more porous or perforated panels with equal or variable porosity through which air is sucked from the boundary layer over the wind tunnel wall into the pressure chamber(s). With the present invention, a variable suction distribution can be achieved over the permeable surface of one suction cell or pressure chamber, using the height of the chamber to create an internal pressure gradient while the airstream inside the chamber is accelerated.

## Description

### BACKGROUND OF THE INVENTION

In general, wind tunnels are used to study the airflow around objects or to measure aerodynamic properties of objects. Because the qualitative studies and the quantitative measurements on airflows are very complicated in the real world, the real world is simulated in a wind tunnel. This means that the object in question is put into the test section of a wind tunnel in a fixed position and that air is being blown or sucked through this test section whilst measuring its aerodynamic effects.

During testing a thin layer of air is created close to the walls which is decelerated compared to the mean airstream velocity due to friction between the airflow through the tunnel and the wind tunnel walls. This layer of air is called the boundary layer (BL). The amount of deceleration in the boundary layer can be expressed in a momentum loss. The boundary layers over the wind tunnel walls have an influence on the wind tunnel measurements which is not present in the real world. Therefore, the boundary layers cause a difference between wind tunnel measurements and real world measurements. As it is the goal to approach the real world situation as close as possible, the effects of the boundary layers in a wind tunnel should be minimized as much as possible.

Particularly in case of the simulation of an object in proximity of the ground, it is important to have a good ground simulation in the wind tunnel. In contrast to the situation in the real world, where there is a relative motion between an object on one side and the air and the ground on the other side, in the usual experimental set-up of an object in ground proximity both the wind tunnel model of the object and the ground plane are stationary and facing the oncoming airflow. As a consequence of the relative velocity between the air and the ground plane, friction effects occur, implying that a so-called Boundary Layer (BL) develops along the ground plane of a wind tunnel. The presence of the BL in the wind tunnel influences the flow and force measurements in the wind tunnel, leading to significant errors in the evaluation of flow behaviour around an object in ground proximity and of aerodynamic forces acting on this object.

In order to collect reliable data, a good ground simulation system should be installed in the wind tunnel to avoid simulation errors. To simulate the ground effect, most wind tunnels have a moving belt in the measurement section which moves at the same velocity as the mean airflow through the wind tunnel. This way, the friction effect between the air and the ground plane is locally reduced. However, a moving belt is limited in size and does not remove the BL which is created due to friction between the airflow through the tunnel and the ground plane in front of the moving belt. Therefore, a moving belt is usually combined with a Boundary Layer Reduction (BLR) system located just in front of the belt.

One of the possible ways to reduce the boundary layer thickness in front of the moving belt is the tangential blowing technique. This approach relies on injecting high momentum flow from a narrow slot tangentially along the wind tunnel floor. However, momentum is added in the form of a very thin jet of air that often needs to travel at greater than four times the freestream velocity. Moving flow at that speed requires a significant amount of compressor power which is a costly solution. This can also create a very noisy environment in the test section. Furthermore, the introduction of this degree of momentum next to the floor distorts the velocity profile well above the floor, causing a pressure gradient and flow angularity in the airflow through the tunnel, which are not present in the real world. The narrow blowing slot is also very sensitive for damages.

As an alternative for tangential blowing, suction systems are used as BLR system in most wind tunnels. A suction system mainly consists of a porous or perforated section in the ground plane upstream of the model, where a certain portion of the BL flow is removed. The air sucked out of the wind tunnel by the suction system can be reinjected in the wind tunnel behind the measurement section. A combination of a moving belt and a discrete suction system is introduced in JP1145542 and EP1671707. However, as the tangential blowing systems, the common (discrete) suction systems induce a significant pressure gradient and flow angularity in the wind tunnel which influence the airflow and the force measurements on the test object. Moreover, it is frequently noticed that common (discrete) suction systems do not deliver a BL which is laterally uniform.

As another alternative to reduce the boundary layer thickness in front of the moving belt, an air scoop can be introduced to peel off the oncoming boundary layer. The advantage of an air scoop is that no significant pressure gradient and/or flow angularity is induced. However, an air scoop removes the boundary layer locally and does not avoid boundary layer growth behind the scoop. As it is practically impossible to position an air scoop right in front of a moving belt, an air scoop is often combined with a discrete suction system. The suction system is then positioned between the air scoop and the moving belt in order to avoid boundary layer growth in that area of the ground plane. However, the application of a discrete suction system brings the same disadvantages as mentioned above.

To solve the problems mentioned above, a distributed or continuous suction system can be introduced. A distributed or continuous suction system can be combined with a moving belt, but it can also be applied over the entire wind tunnel floor, replacing the function of the moving belt.

By spreading the suction effect over a large surface, the induced pressure gradient and angularity can be minimized. Furthermore, by controlling the suction amount and/or the suction distribution over the suction system, a good compromise can be found between all aerodynamic effects due to the suction system, according to the relevant test condition. E.g. for a race car with low ground clearance the boundary layer thickness should be minimized and the flow angularity is of less importance. For a production car however, the suction system should be set such that a minimal pressure gradient and angularity is induced in the wind tunnel flow. In this situation, the exact BL thickness is of less importance. Furthermore, with a suction system allowing a controllable suction distribution, one can anticipate to changing wind tunnel test conditions in order to deliver the desired BL characteristics. Changing test conditions can be:
- different wind tunnel velocity;
- soiling of the permeable suction surface;
- differences between the theoretic system design and the real system as a consequence of inaccuracies in the theoretical models and assumptions or in the production;
- update of the wind tunnel equipment and its influence on the wind tunnel airflow;
- variations in density of the medium (mostly air) which is blown/sucked through the wind tunnel;
- etc.

Continuous and controllable suction systems are described in EP0515278, JP10221202 and JP6213764. In these patents, a distributed suction is established over a wind tunnel ground floor by introducing one or more suction cells or plenum chambers underneath the suction surface. The pressure in and the flow through each cell or plenum chamber can be controlled by a flow regulating device, thereby controlling the suction velocity through the wind tunnel floor section just above the relevant suction cell. The system layout presented in the above mentioned patents implies that in each cell, a constant pressure is present which also means that a constant suction velocity will occur through the permeable surface of each separate cell. A variable suction distribution over the wind tunnel floor can be achieved by setting the flow rate control devices of the suction cells in such a way that different suction velocities are achieved over the different suction cells.

However, in the patents mentioned above, there is no possibility to vary the suction velocity over the permeable surface of one single suction cell or plenum chamber. This means that the suction velocity through the permeable surface of one cell is constant and that a large amount of cells are required in order to achieve a smooth gradient in the suction distribution over the wind tunnel floor.

### SUMMARY OF THE INVENTION

The object of the invention is to provide an improved continuous and controllable suction system for application on wind tunnel walls, and particularly for the ground simulation in wind tunnels.

The present invention provides a boundary layer suction system for a wind tunnel according to claim 1.

With the present invention, a variable suction distribution can be achieved over the permeable surface of one suction cell or pressure chamber, using the height of the chamber to create internal pressure losses while the airstream inside the chamber is accelerated.

The presented suction system offers the possibility to achieve one or more of the following advantages :
- Distributed suction with smooth gradients in the suction distribution can be achieved, which is beneficial in order to minimize pressure gradients and angularities in the mean wind tunnel airflow;
- Less suction cells or pressure chambers are required in order to achieve a desired suction distribution over the wind tunnel wall;
- The suction system becomes less complex, which also reduces the costs of the system;
- The suction system can be made thinner in a direction perpendicular to the wind tunnel wall, which makes it easier to fit the suction system into wind tunnel structures.

The system is adapted to apply active boundary layer suction at one or more of the wind tunnel walls, and comprises one or more suction devices as well as one or more suction cells or pressure chambers which are connected to the suction device(s) by means of one or more suction ducts. The one or more pressure chambers are arranged at one or more of the walls of a wind tunnel, which pressure chambers are defined by a wall structure which comprises a suction plate which replaces a part of the wind tunnel wall and which is formed by one or more porous or perforated panels through which air is sucked from the boundary layer over the wind tunnel wall into the pressure chambers.

The variable suction over a single pressure chamber can be achieved by using porous or perforated materials with different porosities (and different resistances accordingly) in different area's over the pressure chamber.

An additional way to achieve a variable suction over one single pressure chamber is to create a variable underpressure in the pressure chamber by using the internal geometry of the chamber for inducing internal pressure gradients, by steering both wall friction effects and the acceleration effects due to the internal airflow through the pressure chamber. To achieve the desired internal pressure gradients, the connection between the pressure chamber and the duct leading the air from the pressure chamber to the suction device has to be smartly positioned, and the bounding walls of the pressure chamber have to be shaped such that air will be flowing through the pressure chamber in a direction parallel to the relevant wind tunnel wall. An applied design must be made based on the combination of friction effects, acceleration pressure gradients and the resistance of the permeable membranes. Consequently, for a specific boundary layer suction requirement, an optimised design can be made comprising both membrane resistance and geometry effects.

The permeable surface of a pressure chamber may consist of a sintered porous plastic and/or of a perforated metal plate with constant or varying perforations. The sintered porous plastic can have a uniform or varying porosity and/or thickness. A combination of several porous panels can be used as porous surface of a pressure chamber. The pressure drop over the permeable surface is typically between 250 and 2500 Pa per m/s of suction speed. The suction speed is defined as the volume of air which is locally sucked through the suction material, divided by the area of the suction panel through which this volume of air is sucked.

In a preferred embodiment the sintered plastic material is hydrophobic and/or moisture repulsive. Preferably the plastic material is also antistatic. This assures that water, moist, dust and other dirt is prevented from passing the porous suction plate, which results in less maintenance costs. If maintenance is necessary, the one or more porous panels can be easily and with low costs be replaced by new panels. More than a perforated plate, the porous plastic assures a smooth surface which is important to achieve a good airflow over the wind tunnel wall.

The existing sintered porous plastics are mainly made from polypropylene (PP) or polyethylene (PE). More specifically, a combination of the following material families will be used for the sintered suction plates:
- High Density Polyethylene (HDPE)
- Ultra High Molecular Weight Polyethylene (UHMWPE)
- Polypropylene (PP)
- PolyTetraFluoroEthylene (PTFE)
- Polyvinylidene fluoride (PVDF)
- Ethyl Vinyl Acetate (EVA)
- Polyethersulfone (PES)
- Thermoplastic Polyurethane (TPU)
- Nylon 6 (PA 6)
- PE/PP Copolymer

In addition to the static system described above, the suction distribution over one single pressure chamber can be actively controlled by introducing one or more movable walls as one or more of the bounding walls of the pressure chamber.

The movable wall(s) may consist of one or more wall parts, each of the parts being able to rotate and/or translate in all directions, and each of the parts being rigid or having an adjustable shape, which means the wall part(s) can be rotated, translated and/or shaped in order to control the exact internal shape of the pressure chamber. The shape and the position of the wall part(s) can be altered by one or more actuators, controlled by one or more electronic units. By changing the internal shape of the pressure chamber, its throttling effect will change, and consequently the underpressures inside the chamber and the suction distribution over the pressure chamber will change.

The movable bounding walls of the pressure chambers are mainly used to control the suction distribution in the direction of the mean airflow through the wind tunnel. In order to control the suction distribution in lateral direction, several pressure chambers described above can be positioned next to each other. For every pressure chamber, the moving walls can be set separately, enabling a desired gradient in the suction distribution in lateral direction. The width and the amount of the pressure chambers can be varied in order to achieve the desired accuracy in the suction distribution.

The electronic unit(s) which control(s) the actuator(s) in order to change the internal shape of the pressure chamber(s) and which control(s) the suction device setting(s) can be operated manually or can work automatically, based on a mathematical model with one or more of the following inputs:
- Wind tunnel speed;
- Air properties like density and temperature;
- Pressure measurements in the test section and in the relevant pressure chamber(s);
- Friction between the airflow through the tunnel and one or more of the wind tunnel walls;
- Internal friction in the pressure chamber (e.g. measured by cooling of a hot film sensor);
- Measured boundary layer profile(s);
- Desired boundary layer profile(s);
- Measured flow angularity;
- Sound measurements in the test section and/or in the pressure chamber(s).

In a preferred embodiment, the distributed and controllable suction system consists of one or more pressure chambers (located next to each other in lateral direction) which are located as close as possible to the leading edge of a moving belt and which are at least 0,5 metre long in the direction of the wind tunnel airflow. Preferably, the duct(s) leading to the suction device(s) is/are connected to the pressure chamber(s) at a most upstream location. As a consequence, the airflow through the pressure chamber will flow in an opposite direction compared to the wind tunnel airflow, causing the highest suction at the most upstream location and causing a decreasing suction in wind tunnel flow direction.

Preferably the suction surface of a pressure chamber consists of a sintered porous plastic, supported by a perforated metal plate which provides for the required stiffness and strength of the panel. The sintered porous plastic has an aerodynamically smooth surface. Due to the relatively low porosity of the porous plate compared to existing discrete BLR systems, the pressure chambers can be relatively thin and a possible airflow out of the pressure chamber through the porous surface is prevented when the suction system is not operating.

### BRIEF DESCRIPTION OF THE DRAWINGS

Figure 1 shows in an exploded view the structure of a pressure chamber of a possible embodiment of a suction system according to the invention;
Figure 2 shows in a sectional view a possible embodiment of the boundary layer suction system according to the invention;
Figure 3 shows in a sectional view another possible embodiment of the boundary layer suction system according to the invention;
Figure 4 shows a suction system configuration according to the invention, comprising several pressure chambers next to each other;
Figure 5 shows two suction systems according to the invention, one system applied in front of the turntable of a wind tunnel, the second system applied on the turntable;
Figure 6 shows another boundary layer suction system according to the invention, where a part of the porous plate is replaced by a suction slot; and
Figure 7 shows a boundary layer suction system according to the invention, the system combined with an air scoop and positioned behind the scoop.

### DETAILED DESCRIPTION

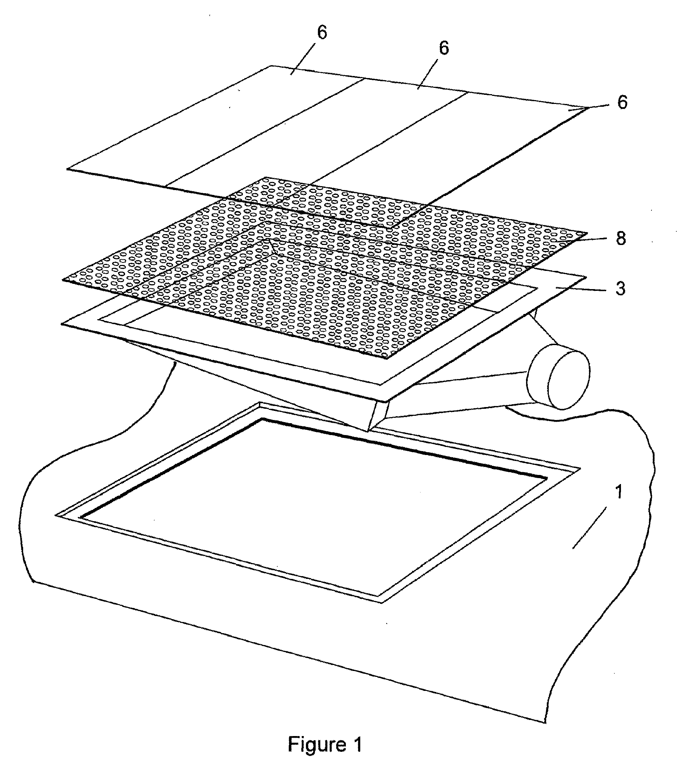

Figure 1 shows the principal components of a suction system as can be integrated in a wind tunnel wall 1. In the wind tunnel wall a pressure box comprising bounding walls defining a pressure chamber 3 is placed. The open top of the pressure box is covered with a structural component, typically a rigid perforated plate 8 and a permeable plate 5 consisting of one or more porous panels 6 with certain flow resistant properties. As can be seen in the figure the permeable plate 5 is placed on top of the perforated plate 8 such that the latter supports the former.

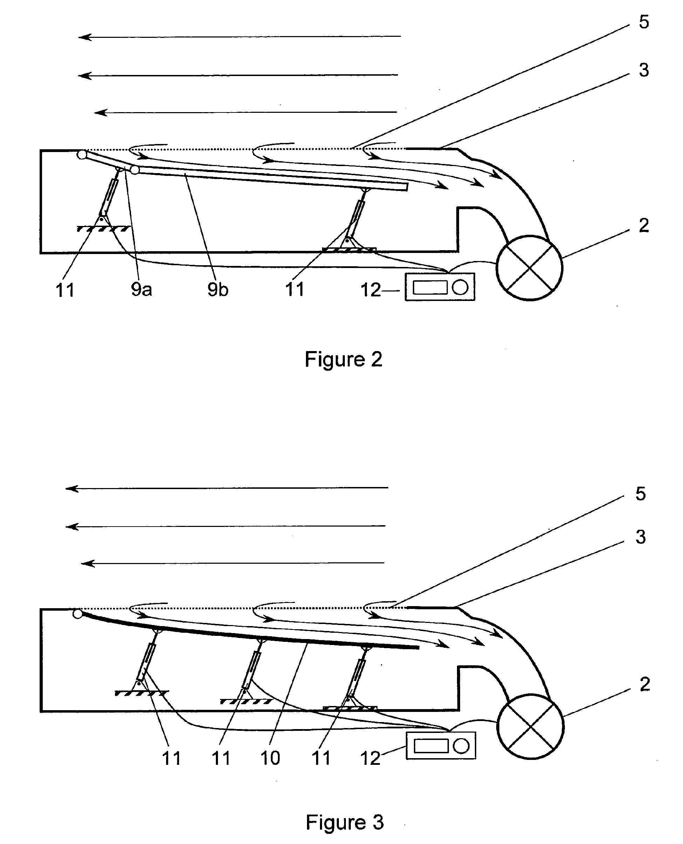

Figure 2 shows the principal components of a suction system, the system having a pressure chamber 3 equipped with a moving wall 9. In the example shown in this figure 2, the moving wall consists of two wall parts 9a and 9b which can be rotated and translated. Embodiments with another amount of wall parts are also conceivable. The wall parts 9a and 9b in this example are substantially rigid and are interconnected by hinges or by other suitable connecting means allowing the separate positioning of the wall parts 9a, 9b. The movement of the wall parts 9a and 9b can be controlled by two actuators 11, which are in turn controlled by an electronic control unit 12. The electronic control unit 12 preferably also controls the suction device 2 settings. By moving the wall parts 9a and 9b to another position, the internal shape of the pressure chamber 3 is changed. This can be used to induce pressure gradients in the airflow through the pressure chamber 3. The variable pressure distribution inside the pressure chamber 3 enables the wind tunnel user to control the suction distribution over the permeable plate 5 of the suction system.

Figure 3 shows the principal components of another embodiment of a suction system, the system having a pressure chamber 3 equipped with a moving wall with variable shape. In this example the moving wall consists of a single flexible wall part 10. The shape of the wall part 10 can be controlled by three actuators 11, which are in turn controlled by an electronic control unit 12. The electronic control unit 12 may also control the suction device 2 settings. By changing the shape and/or position of the wall 10, the internal shape of the pressure chamber 3 is changed. This allows for inducing pressure gradients in the airflow through the pressure chamber 3. The variable pressure distribution inside the pressure chamber 3 enables the wind tunnel user to control the suction distribution over the permeable plate 5 of the suction system.

In Figures 2 and 3 are shown examples of a pressure chamber 3 having a movable wall with either rigid wall parts or a flexible wall part. However, it is to be understood that also a combination of rigid and flexible wall parts is envisaged, or a wall comprising a plurality of flexible wall parts.

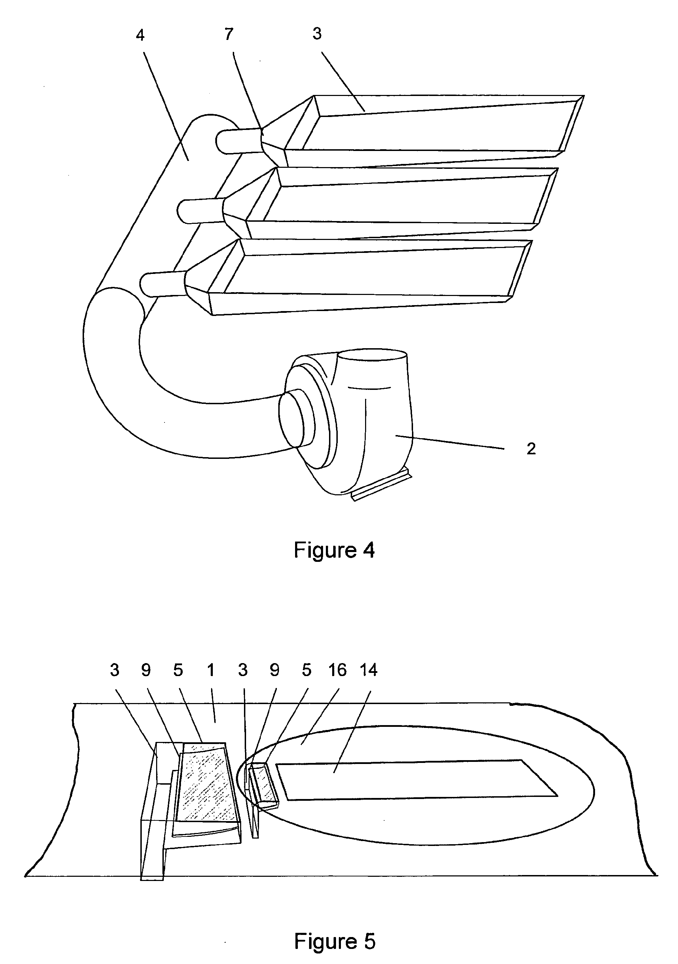

Figure 4 shows the principal layout of an array of pressure chambers 3 connected to the same suction device 2. Each pressure chamber has a specifically designed connection 7 to the suction duct 4. Both the connections 7 and the suction duct 4 are part of the design in order to create different pressures and pressure gradients in the airflow through the different pressure chambers 3. When the different pressure chambers 3 are positioned closely next to each other in lateral direction of the wind tunnel, the suction amount and suction distribution can be controlled not only in flow direction, but also in lateral direction.

Figure 5 shows a possible integration of two typical suction systems as shown in figures 1, 2 and/or 3 in the wind tunnel floor with a turntable 16 and a moving belt 14. The turntable 16 enables the rotation of the wind tunnel object in order to measure the aerodynamic properties of the object in an asymmetrical position. The moving belt 14 moves at the same velocity as the mean airflow through the wind tunnel. This way, the friction effect between the air and the ground plane is locally reduced. However, a moving belt 14 is limited in size and does not remove the boundary layer which is created due to friction between the airflow through the tunnel and the ground plane in front of the moving belt. Therefore, a moving belt is combined with one or more suction systems.

In the example of figure 5, one suction system is located in front of the turntable 16 and reduces drastically the thickness of the oncoming boundary layer. The system comprises one large pressure chamber 3 with an internal moving wall 9 and a porous plate 5. The second suction system is located on the wind tunnel turntable 16 in front of the moving belt 14 and avoids boundary layer growth towards the moving belt 14. The small suction system on the turntable 16 consists of the same major components then the large system in front of the turntable 16. In reality, also suction systems with different layouts can be combined. By delivering a boundary layer with minimum thickness by using a minimal amount of suction, the negative effects of the boundary layer and of the boundary layer reduction system on the wind tunnel measurements can be minimized.

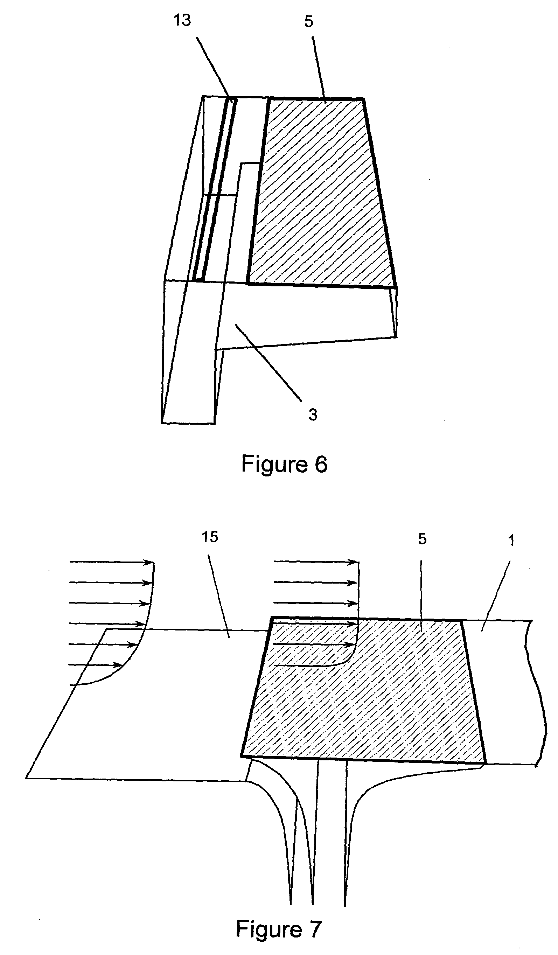

Figure 6 shows another possible embodiment of a boundary layer suction system according to the invention. The suction system comprises a pressure chamber 3 bounded by a permeable plate 5 made up of one or more porous panels, combined with an upstream plate having a suction slot 13 which removes the boundary layer with a high speed relative to the suction speed occurring through the suction plate 5. The relative position between the suction slot 13 and the suction plate 5 can vary. Preferably, the suction slot 13 is located in front of the permeable plate 5 in order to remove the major part of the decelerated boundary layer flow. As a result of the suction slot 13, the boundary layer thickness behind the suction slot 13 is minimal. The goal of the distributed suction behind the suction slot 13 over suction plate 5 is to minimize boundary layer growth.

Figure 7 shows a boundary layer suction system according to the invention, combined with an air scoop 15 mounted in a wind tunnel wall 1. The air scoop 15 removes a major part of the oncoming boundary layer caused by the level difference in the wall 1. The suction system minimizes the boundary layer growth behind the air scoop 15. Possibly - although not shown in the figure - a moving belt is positioned right behind the permeable plate 5 of the suction system. As shown in the figure, the suction system geometry can be part of the air scoop 15 system design.

## Claims

1. Boundary layer suction system for a wind tunnel, the system being adapted to apply active boundary layer suction at one or more walls (1) of the wind tunnel, and comprising one or more suction devices (2) as well as one or more pressure chambers (3) which are in communication with the boundary layer at the wind tunnel wall (1) and which are connected to the suction device(s) (2) by means of one or more suction ducts (4), **characterized in that** the one or more pressure chambers (3) are arranged at one or more of the wind tunnel walls, which pressure chambers (3) are defined by a wall structure which comprises a suction plate (5) which forms a part of the wind tunnel wall concerned, said suction plate being formed by one or more porous or perforated panels (6) with a uniform or variable porosity through which air is sucked from the boundary layer at the wind tunnel wall (1) into the pressure chamber(s) (3) upon operation of the suction device(s) (2).

2. System according to claim 1, wherein the one or more pressure chambers (3) are defined by a wall structure which comprises, besides a suction plate (5), one or more bounding walls which guide air flowing through the pressure chamber(s) (3) in a direction which has a direction component parallel to the relevant wind tunnel wall (1) towards one or more connections (7) between the pressure chamber(s) (3) and the duct(s) (4) leading to the suction device(s) (2).

3. System according to claim 1 or 2, wherein the suction panel is made of a sintered porous plastic with uniform or variable porosity through which air is sucked from the boundary layer over the wind tunnel wall (1) into the pressure chamber(s) (3).

4. System according to claim 3, wherein the suction panel (6) is supported by a perforated metal plate (8) which provides for the required stiffness and strength.

5. System according to any one of the preceding claims, wherein at least one bounding wall of the pressure chamber(s) (3) is a movable wall (9).

6. System according to claim 5, wherein the movable wall (9) comprises one or more wall parts (9a, 9b), each of the wall parts (9a, 9b) being able to rotate and/or translate in all directions, such that the wall (9) can be rotated, translated and/or shaped in order to control the internal shape of the bounded pressure chamber (3).

7. System according to claim 5 or 6, wherein the movable wall comprises one or more flexible wall parts, which can preferably be rotated and/or translated and the shape of which can be adjusted in order to control the internal shape of the bounded pressure chamber (3).

8. System according to claim 5, 6 or 7, wherein the position, orientation and/or shape of the movable wall is controlled by at least one actuator (11), the system further comprising a control unit (12) to control the actuator(s) (11) and, preferably, also the suction device (2) settings, which control unit can preferably be operated manually.

9. System according to claim 8, wherein the system further comprises measurement devices coupled to the control unit (12) for measuring certain parameters, e.g. wind tunnel speed, air properties, pressures and/or sound in the wind tunnel and/or in the pressure chamber(s), friction on the wind tunnel wall(s) and/or in the pressure chamber(s) and flow angularity in the wind tunnel flow, for automatically controlling the actuator(s) (11) and the suction device(s) (2) according to a mathematical model based on the measured parameters.

10. System according to any one of the preceding claims, wherein the suction plate (5) is combined with a plate with one or more suction slots (13) or is partially or in whole replaced by a plate with one or more suction slots (13).

11. System according to any one of the preceding claims, wherein the suction effect can be altered to blowing.

12. System according to any one of the preceding claims, wherein the suction effect can be altered to tangential blowing.

13. System according to any one of the preceding claims, wherein the system is specifically applied on the wind tunnel floor in order to improve the ground simulation for tests of vehicles in ground proximity.

14. System according to claim 13, wherein the system is combined with a moving belt (14).

15. System according to claim 13 or 14, wherein the system is combined with an air scoop (15), the system being located downstream the air scoop seen in the direction of the airflow through the wind tunnel.

16. System according to claim 15, wherein the boundary layer suction system geometry is part of the air scoop (15) system design.

17. System according to any one of the claims 13 - 16, wherein the system is combined with a turntable (16), the system being located on the turntable and/or upstream of the turntable.
